# EUROPÄISCHE PATENTANMELDUNG

(11) **EP 2 353 697 A1**
(43) Veröffentlichungstag der Anmeldung: **10.08.2011**
(21) Anmeldenummer: 11000792.9
(22) Anmeldetag: 01.02.2011
(51) Int. Cl.: B01D 53/04

(54) **Adsorberstation**

(30) Priorität: 04.02.2010 DE 102010006870
(71) Anmelder: Linde AG, 80331 München (DE)
(72) Erfinder: Bahner, Valdo, 81377 München (DE)
(74) Vertreter: Zahn, Christoph

(57) **Zusammenfassung**

Es wird eine Adsorberstation beschrieben, aufweisend
- zwei parallel zueinander angeordnete Adsorber (A, B), die abwechselnd Adsorptions- und Regenerierphasen durchlaufen,
- pro Adsorber wenigstens zwei Leitungen (1a, 2a, 3a, 4a), über die den Adsorbern (A, B) während der Adsorptionsphase das adsorptiv zu behandelnde Gasgemisch (Einsatzgas) zugeführt sowie adsorptiv behandeltes Gasgemisch (Produktgas) abgezogen und über die den Adsorbern (A, B) während der Regenerierphase Regeneriergas zugeführt sowie abgezogen wird,
- eine Einsatzgas-Zuführleitung (1),
- eine Produktgas-Abführleitung (2),
- eine Regeneriergas-Zuführleitung (3) und
- eine Regeneriergas-Abführleitung (4).
Erfindungsgemäß
- sind die Leitungen (1a, 4a) der Einsatzgasseite der Adsorber (A, B) mit der Einsatzgas-Zuführleitung (1) und der Regeneriergas-Abführleitung (4) über eine erste Umlenkklappe (U1) und
- die Leitungen (2a, 3a) der Produktgasseite der Adsorber (A, B) mit der Produktgas-Abführleitung (2) und der Regeneriergas-Zuführleitung (3) über eine zweite Umlenkklappe (U2) verschaltet.

## Beschreibung

Die Erfindung betrifft eine Adsorberstation, aufweisend
- zwei parallel zueinander angeordnete Adsorber, die abwechselnd Adsorptions- und Regenerierphasen durchlaufen,
- pro Adsorber wenigstens zwei Leitungen, über die den Adsorbern während der Adsorptionsphase das adsorptiv zu behandelnde Gasgemisch (Einsatzgas) zugeführt sowie adsorptiv behandeltes Gasgemisch (Produktgas) abgezogen und über die den Adsorbern während der Regenerierphase Regeneriergas zugeführt sowie abgezogen wird,
- eine Einsatzgas-Zuführleitung,
- eine Produktgas-Abführleitung,
- eine Regeneriergas-Zuführleitung und
- eine Regeneriergas-Abführleitung.

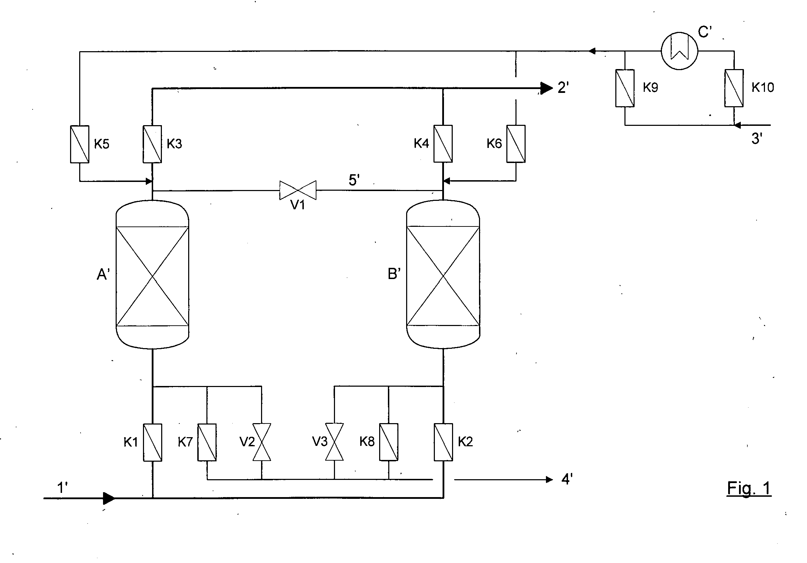

Eine gattungsgemäße Adsorberstation sei nachfolgend anhand der in der Figur 1 dargestellten Adsorberstation erläutert.

Diese Adsorberstation weist zwei parallel zueinander angeordnete Adsorber A' und B' auf. Gattungsgemäße Adsorberstationen werden beispielsweise zur Entfernung von Wasser, Kohlendioxid und/oder Kohlenwasserstoffen aus Luft, die anschließend beispielsweise einer Tieftemperaturzerlegung unterworfen wird, verwendet.

Der verdichtete Luftstrom - die Verdichtung des Luftstroms ist in der Figur 1 nicht dargestellt - wird üblicherweise mit einem Druck von ca. 4,8 bis 5,5 bara und einer Temperatur von 8 bis 17 °C demjenigen Adsorber, der sich in der Adsorptionsphase befindet, zugeführt. Befindet sich der Adsorber A' in der Adsorptionsphase, wird ihm der Luftstrom über die Leitung 1' bei geöffneter Klappe K1 zugeführt (Anm.: Die nachfolgend nicht erwähnten Klappen und Ventile sind geschlossen). Nach Durchgang durch den Adsorber A' wird der Luftstrom über die Leitung 2' bei geöffneter Klappe K3 abgeführt. Aufgrund der Adsorptionswärme weist der über die Leitung 2' abgezogene Luftstrom eine gegenüber der Eintrittstemperatur um etwa 7 K höhere Austrittstemperatur auf.

Während sich der Adsorber A' in der Adsorptionsphase befindet, wird der Adsorber B' einer Regenerierung unterworfen. Dazu wird über Leitung 3' ein Regeneriergasstrom herangeführt, bei dem es sich beispielsweise um ein Stickstoff-reiches, aus der Tieftemperaturzeriegung stammendes trockenes Gasgemisch handelt. Über die geöffneten Klappen K9 und/oder K10 sowie K6 und K8 wird der Regeneriergasstrom durch den Adsorber B' geführt und anschließend über Leitung 4' abgezogen.

Üblicherweise weist die Regenerierphase eine sog. Ausheizphase auf; deren Dauer beträgt ca. 1/3 der Dauer der Regenerierphase. Während dieser Ausheizphase wird der Regeneriergasstrom bei geöffneter Klappe K10 - die Klappe K9 ist in diesem Fall geschlossen - über den Erhitzer bzw. die Heizvorrichtung C' geführt und auf eine Temperatur von ca. 180 °C erhitzt. Während der restlichen Zeit der Regenerierphase liegt die Temperatur des Regeneriergases üblicherweise wenige Grad unterhalb der Austrittstemperatur des Luftstromes.

Die Adsorberbehälter A' und B' werden zyklisch umgeschaltet, vorzugsweise etwa alle vier Stunden, wobei die Zeitdauer vom Füllvolumen bestimmt wird, ohne dass dabei jedoch die Zufuhr des über die Leitung 1 herangeführten Luftstromes unterbrochen werden muss. Befindet sich der Adsorber B' in der Adsorptionsphase, wird der Luftstrom bei geöffneten Klappen K2 und K4 durch ihn hindurchgeleitet und anschließend über die Leitung 2' abgezogen. Dem in der Regenerierphase befindlichen Adsorber A' wird bei geöffneten Klappen K9 und/oder K10 sowie K5 und K7 Regeneriergas zugeführt und anschließend über die Leitung 4' abgezogen.

Die in der Figur 1 dargestellte Leitung 5' sowie das in ihr angeordnete Druckaufbauventil V1 dienen dem Druckaufbau der beiden Adsorber A' und B' zu Beginn deren Adsorptionsphase. Dargestellt sind des Weiteren zwei Druckabbauventile V2 und V3, die dem Druckabbau in den Adsorbern dienen.

Wie aus der Figur 1 ersichtlich, weist die vorbeschriebene gattungsgemäße Adsorberstation 13 Armaturen auf, nämlich zehn Klappen sowie drei Ventile.

Aufgabe der vorliegenden Erfindung ist es, eine gattungsgemäße Adsorberstation anzugeben, bei der die Zahl der Armaturen reduziert ist.

Zur Lösung dieser Aufgabe wird eine Adsorberstation vorgeschlagen, die dadurch gekennzeichnet ist, dass
- die Leitungen (1a, 4a) der Einsatzgasseite der Adsorber (A, B) mit der Einsatzgas-Zuführleitung (1) und der Regeneriergas-Abführleitung (4) über eine erste Umlenkklappe (U1) und
- die Leitungen (2a, 3a) der Produktgasseite der Adsorber (A, B) mit der Produktgas-Abführleitung (2) und der Regeneriergas-Zuführleitung (3) über eine zweite Umlenkklappe (U2) verschaltet sind.

Unter den Begriffen "Einsatzgasseite und Produktgasseite der Adsorber" seien diejenigen Seiten bzw. Enden der Adsorber zu verstehen, denen das Einsatzgas zugeführt bzw. von denen das Produktgas abgezogen wird.

Unter dem Begriff "Umlenkklappe" seien hierbei auch andere Armaturen, bspw. Vierwege-Ventile, -Kugelhähne, -Weichen, etc. zu verstehen, die eine zumindest annähernd identische Wirkung bzw. Funktion wie eine Umlenkklappe ermöglichen.

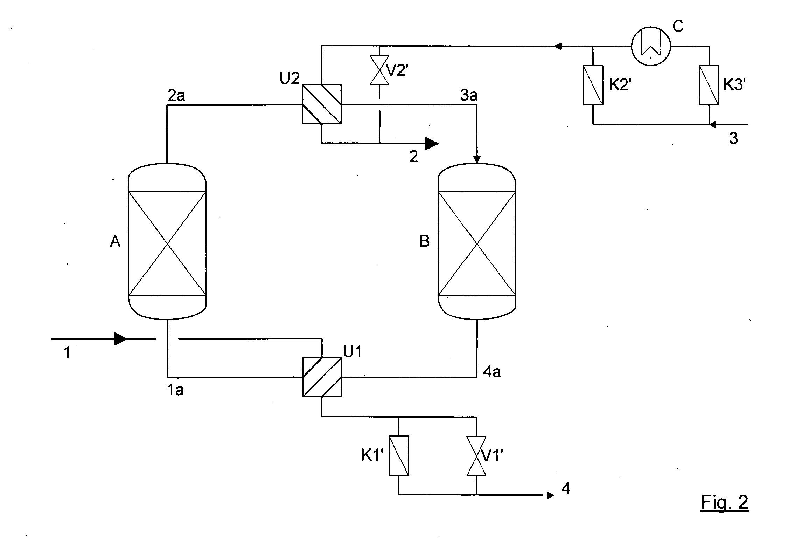

Die erfindungsgemäße Adsorberstation sowie weitere Ausgestaltungen derselben seien nachfolgend anhand des in der Figur 2 dargestellten Ausführungsbeispiels näher erläutert.

Erfindungsgemäß sind die Leitungen 1a und 4a der Einsatzgasseite der beiden Adsorber A und B mit der Einsatzgas-Zuführleitung 1 und der Regeneriergas-Abführleitung 4 über eine erste Umlenkklappe U1 und die Leitungen 2a und 3a der Produktgasseite der Adsorber A und B mit der Produktgas-Abführleitung 2 und der Regeneriergas-Zuführleitung 3 über eine zweite Umlenkklappe U1 verschaltet.

Befindet sich der Adsorber A nunmehr in der Adsorptionsphase, wird die Umlenkklappe U1 derart geschaltet, dass der Luftstrom über die Leitungsabschnitte 1 und 1a dem Adsorber A zugeführt wird. Die Umlenkklappe U2 ist während dessen so geschaltet, dass das Produktgas aus dem Adsorber A über die Leitungsabschnitte 2a und 2 abgezogen werden kann.

Zeitgleich befindet sich der Adsorber B in der Regenerierphase. Dabei wird über die Leitungsabschnitte 3 und 3a Regeneriergas dem Adsorber B zugeführt und nach dem Hindurchleiten durch den Adsorber B über die Leitungsabschnitte 4a und 4 abgezogen. Über die Stellung der Klappen K2' und K3' wird festgelegt, ob der Regeneriergasstrom zumindest teilweise durch den Erhitzer bzw. die Heizvorrichtung C geführt wird.

Zum Umschalten zwischen der Adsorptions- und der Regenerierphase in den Adsorbern müssen nach der Druckaufbauphase (Ventil V2' geöffnet, Klappen K2' und K3' geschlossen) nunmehr lediglich die beiden Umlenkklappen U1 und U2 verstellt werden. Dies hat zur Folge, dass der dem dann in der Adsorptionsphase befindlichen Adsorber B zuzuführende Luftstrom über die Leitungsabschnitte 1 und 4a dem Adsorber B zugeführt und über die Leitungsabschnitte 3a und 2 aus dem Adsorber B abgezogen wird. Zeitgleich wird nach der Druckabbauphase (Ventil V1' geöffnet, Ventil V2' sowie Klappen K2' und K3' geschlossen) über die Leitungsabschnitte 3 und 2a dem dann in der Regenerierphase befindlichen Adsorber A Regeneriergas zugeführt (Klappen K1', K2' und K3' geöffnet), das nach Durchgang durch den Adsorber A über die Leitungsabschnitte 1a und 4 abgezogen wird.

Über das Ventil V2' ist ein Druckaufbau eines zuvor in der Regenerierphase befindlichen Adsorbers realisierbar, indem ein Teilstrom des aus dem in der Adsorptionsphase befindlichen Adsorber abgezogenen Produktgases 2 dem aufzudrückenden Adsorber über das geöffnete Ventil V2' zugeführt wird. Das in der Figur 2 ebenfalls dargestellte Ventil V1' ermöglicht die Realisierung eines Druckabbauschritts in den Adsorbers A und B.

Im Gegensatz zu der anhand der Figur 1 beschriebenen Adsorberstation weist die erfindungsgemäße Adsorberstation nunmehr lediglich sieben Armaturen auf, nämlich zwei Umlenkklappen U1 und U2, drei Klappen K1' bis K3' sowie zwei Ventile V1' und V2'.

Die erfindungsgemäße Adsorberstation führt zu einer wesentlichen Kostenersparnis aufgrund der Reduzierung der Armaturen sowie aufgrund einer einfacheren Verrohrung, da insbesondere die bisher vorzusehende Ringleitung am Ein- und Austritt der Adsorber entfallen kann.

Des Weiteren wird die Steuerung des in der erfindungsgemäßen Adsorberstation realisierten Adsorptionsprozesses vereinfacht. Darüber hinaus verringert sich der Wartungsaufwand der erfindungsgemäßen Adsorberstation und es lassen sich Einsparungen bei der Ersatzteilhaltung realisieren.

Es sei betont, dass die vorbeschriebene erfindungsgemäße Adsorberstation nicht nur für die adsorptive Abtrennung von Wasser, Kohlendioxid und/oder Kohlenwasserstoffen aus Luft geeignet ist, sondern für jede adsorptive Auftrennung eines Gasgemisches.

## Patentansprüche

1. Adsorberstation, aufweisend
- zwei parallel zueinander angeordnete Adsorber (A, B), die abwechselnd Adsorptions- und Regenerierphasen durchlaufen,
- pro Adsorber wenigstens zwei Leitungen (1a, 2a, 3a, 4a), über die den Adsorbern (A, B) während der Adsorptionsphase das adsorptiv zu behandelnde Gasgemisch (Einsatzgas) zugeführt sowie adsorptiv behandeltes Gasgemisch (Produktgas) abgezogen und über die den Adsorbern (A, B) während der Regenerierphase Regeneriergas zugeführt sowie abgezogen wird,
- eine Einsatzgas-Zuführleitung (1),
- eine Produktgas-Abführleitung (2),
- eine Regeneriergas-Zuführleitung (3) und
- eine Regeneriergas-Abführleitung (4),
**dadurch gekennzeichnet, dass**
- die Leitungen (1a, 4a) der Einsatzgasseite der Adsorber (A, B) mit der Einsatzgas-Zuführleitung (1) und der Regeneriergas-Abführleitung (4) über eine erste Umlenkklappe (U1) und
- die Leitungen (2a, 3a) der Produktgasseite der Adsorber (A, B) mit der Produktgas-Abführleitung (2) und der Regeneriergas-Zuführleitung (3) über eine zweite Umlenkklappe (U2) verschaltet sind.
